# EUROPEAN PATENT SPECIFICATION

(11) **EP 4 548 022 B1**
(45) Date of publication and mention of the grant of the patent: **04.03.2026**
(21) Application number: 22744381.9
(22) Date of filing: 28.06.2022
(51) Int. Cl.: F24S 25/634

(54) **FASTENING CLIP**
BEFESTIGUNGKLAMMER
PINCE DE FIXATION

(43) Date of publication of application: 07.05.2025
(73) Proprietor: A. RAYMOND ET CIE, 38000 Grenoble (FR)
(72) Inventor: FENG, Liqiang, Zhenjiang, Jiangsu 212009 (CN); LOCATELLI, Julien, 38500 Voiron (FR)
(74) Representative: Santarelli
(86) International application number: PCT/CN2022/101829
(87) International publication number: WO 2024/000151

(56) References cited:
- US-A1- 2012 097 207
- US-A1- 2013 048 056
- US-A1- 2013 136 531
- US-A1- 2014 003 861
- US-A1- 2019 312 546

## Description

### Technical field of the invention

The present invention relates to the technical field of fastening means, and more particularly to means for fastening panels, for example solar panels, to a support rail.

The invention relates to a fastening clip for securing panels to rails.

The fastening clip according to present invention is a monobloc piece which is configured to hold the panel clamped against the rail.

### Technical background

It is known in the prior art that fastening kits are used to hold a panel.

US9160273 discloses a fastening kit for fastening a panel, and in particular a solar panel, to a rail. In this regard, the fastening kit comprises a holding member, a bolt and a slide member. However, this fixing kit using a bolt or a screw is not satisfactory.

This is because the bolt can loosen over time, for example due to temperature changes. This loosening has the effect of reducing the holding force exerted by the holding member on the panel, and can ultimately lead to disassociation of the panel from the rail. Consequently, the adjacent panels can also have their grip on the rail reduced and in turn become detached from the rail**.** Moreover, the sliding member, which is not easily accessible, can hardly be replaced in case of necessity.

US 2013/136531 A1 discloses a fastening clip, for holding a panel clamped by one of its faces, named a contact face, against a rail comprising at least two grooves, the fastening clip comprises: one wall which extends extend along an axis; two lateral wings, which laterally extend the wall from its upper end in two opposite directions and away from each other, the lateral wings being intended to rest against a face of the panel opposite the contact face; two attachment feet which are suitable to be received each by one said groove.

### Summary of the invention

An object of the present disclosure is to provide a fastening clip, for holding a panel clamped by one of its faces, named a contact face, against a rail comprising at least two grooves.

The fastening clip comprises:
- two opposite walls, which extend along an axis AA';
- a plate, which connects directly the two walls by their lower ends;
- two lateral wings, which laterally extend the two walls from their upper ends in two opposite directions and away from each other, the lateral wings being intended to rest against a face of the panel opposite the contact face;
- two attachment feet, which extend divergently towards the lateral wings and are suitable to be received each by one said groove.

The fastening clip is a one-piece construction or a monobloc piece.

Advantageously, the fastening clip is a monobloc piece which is more solid compared. It is easy to replace such a fastening clip in case of necessity.

As a one-piece construction, the assembly process is advantageously simplified compared with fastening kits which require more assembly work.

The fastening clip presents elastic performances and can absorb vibration for example caused by severe weather conditions.

In some embodiments, the two opposite walls comprise each, on their vertical edges of different sides, a vertical gap.

Advantageously, a quarter turn install can be used to mount the fastening clip on the rail.

In some embodiments, each of lateral wings comprises at least one tab with tip projecting toward the plate.

Advantageously, this can enhance the clamp of the panel frame and assure the grounding function.

In some embodiments, each of lateral wings comprises means for elevating the lateral wing, such as least one hook.

Advantageously, this allows an easy disassembly.

In some embodiments, the fastening clip comprises at least one holding means for connecting directly the opposite walls.

Advantageously, this can prevent the two opposite walls from toppling in the middle.

In some embodiments, at least one holding means consists of two arms.

In some embodiments, the arms are attached by means of hooks.

In some embodiments, the arms contact each other.

In some embodiments, the attachment feet connect directly the two opposite walls.

In some embodiments, the attachment feet laterally extend the plate by two opposite sides.

In some embodiments, at least one attachment foot comprises a free upper end extending toward one lateral wing.

Advantageously, this allows to lock the rail's ceiling in its grooves.

In some embodiments, two opposite walls comprise at least one stiffener.

Advantageously, the opposite walls are strengthened.

More generally, the fastening clip of the present invention is made of metal material.

Another object of the present disclosure is to provide a kit of parts for clamping at least an elongated panel.

The kit comprises:
- at least one fastening clip according to present invention; and
- at least one rail with a U-shaped section.

A further object of the present disclosure is to provide a method for installing two panels with a kit of parts according to present invention.

The installing method comprises the following steps:
- installing a fastening clip in a rail;
- inclining the clip such that a first lateral wing is elevated;
- mounting a first panel between the first lateral wing and the rail;
- mounting a second panel between a second lateral wing and the rail.

In some embodiments, the step of installing a fastening clip in a rail comprises a quarter turn install.

Further advantages will be apparent from the following description of the present disclosure.

### Brief description of the drawings

The invention may be better understood by referring to the following description and accompanying drawings that illustrate embodiments of the invention. Among the drawings:
Figure 1 illustrates a perspective view showing a fastening kit installed on a support rail;
Figure 2 illustrates a perspective view of a fastening clip according to one embodiment of present invention;
Figure 3 illustrates a perspective view showing a fastening clip according to one embodiment of present invention, which is installed on a support rail;
Figure 4A illustrates a perspective view showing a fastening clip according to a first embodiment of present invention;
Figure 4B illustrates a perspective view showing a fastening clip according to a second embodiment of present invention;
Figure 4C illustrates a perspective view showing a fastening clip according to a third embodiment of present invention;
Figure 5A illustrates a side view showing a fastening clip according to the first embodiment of present invention;
Figure 5B illustrates a side view showing a fastening clip according to the second embodiment of present invention;
Figure 5C illustrates a side view showing a fastening clip according to the third embodiment of present invention;
Figure 6A illustrates a perspective view showing a fastening clip according to the first embodiment, with panels being held on a support rail;
Figure 6B illustrates a side view showing a fastening clip according to the second embodiment, with panels being held on a support rail;
Figure 6C illustrates a view from above showing a fastening clip according to the third embodiment, with panels being held on a support rail;
Figures7A-7F illustrate consecutive steps of how to fasten panels on a support rail with a fastening clip according to present invention;
Figure 8A illustrates a method to add a first panel between a fastening clip and a support rail;
Figure 8B illustratesa method to add a second panel between a fastening clip and a support rail.

### Detailed description of embodiments

Embodiments of the present disclosure are described in detail with the technical matters, structural features, achieved objects, and effects with reference to the accompanying drawings. Specifically, the terminologies in the embodiments of the present disclosure are merely for describing the purpose of the certain embodiment, but not to limit the disclosure.

The expression of the singular number in the present disclosure includes the meaning of the plural number unless the meaning of the singular number is definitely different from that of the plural number in the context. In the following description, the term "include" or "have" may represent the existence of a feature, a number, a step, an operation, a component, a part or the combination thereof described in the present disclosure, and may not exclude the existence or addition of another feature, another number, another step, another operation, another component, another part or the combination thereof.

The terms "first" or "second" are used for the purpose of explanation about various components, and the components are not limited to the terms "first" and "second". The terms "first" and "second" are only used to distinguish one component from another component. For example, a first component may be named as a second component without deviating from the scope of the present disclosure.

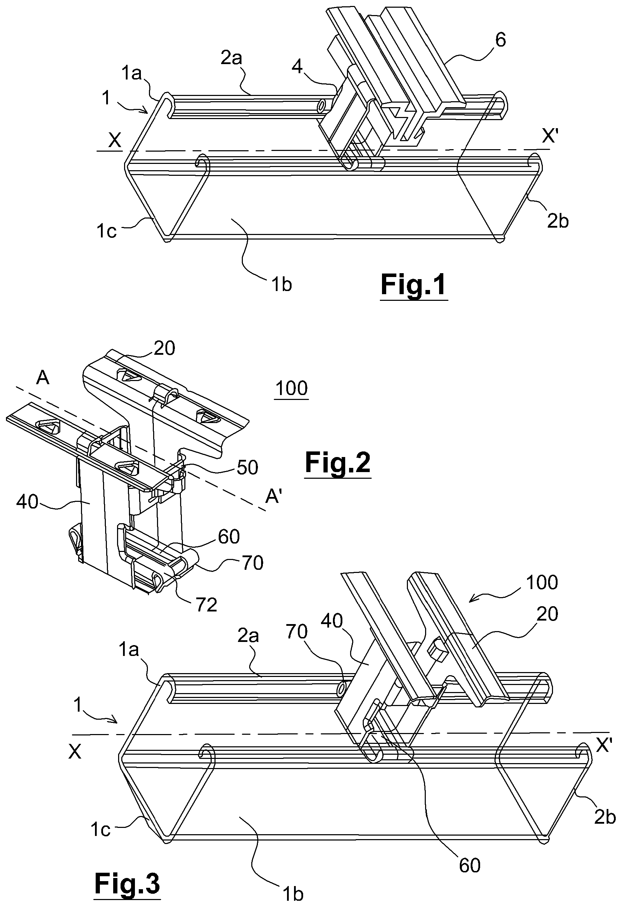

On Figure 1, we observe a perspective view of a fastening kit 4, 6 installed on a support structure comprising a rail 1.

The fastening kit comprises two parts: a lower part 4 and an upper part 6. Figure 1 illustrates the mounting of a panel (now shown), in particular a solar panel, on the rail 1 which has a U-shaped cross-section according to a sectional plane perpendicular to an elongation direction XX' of said rail. The rail 1 forms an opening 3 delimited by two side walls 1a and 1b connected by a bottom 1c. The side walls 1a and 1b are, moreover, extended, by their edge parallel to the direction of elongation XX', by inwardly bent sections so as to form, each, a groove 2a and 2b. It is understood that the two grooves 2a and 2b are inverted with respect to the opening 3. It is also understood that the two inwardly bent sections are spaced apart from each other to allow insertion of the fastening kit into the opening 3.

The lower part 4 is received in the opening 3 of the rail 1 and the upper part is supported and held by the lower part 4. The upper part has two lateral parts which are holding the panel clamped by its upper face against rail. The lower part is held by the grooves 2a, 2b of the rail.

The lower part 4 and upper part 6 are connected by means known in the art.

Figure 2 shows a perspective view of a fastening clip according to one embodiment of present invention.

Contrary to the embodiment of Figure 1, the fastening clip 100 is a one-piece construction. The fastening clip comprises:
- two opposite walls 40; the two opposite walls extend along an axis AA';
- a bottom plate 60; the plate 60 connects directly the two walls 40 by their lower ends;
- two lateral wings 20; the lateral wings laterally extend the two opposite walls 40 from their upper ends in two opposite directions and away from each other. Furthermore, the lateral wing is intended to rest against a face of the panel opposite the contact face;
- two attachment feet 70; the attachment feet extend divergently towards the lateral wings 20 and are suitable to be received each by one said groove 2a, 2b.

According to this illustrated embodiment and optionally, the attachment feet 70 laterally extend the plate 60 by two opposite sides.

Always according to the illustrated embodiment and optionally, at least one attachment foot 70 comprises a curved upper end 72.

Figure 3 shows a perspective view showing a fastening clip 100 according to one variant of present invention, which is installed on a support structure.

The support structure comprises a rail 1 having a U-shaped cross-section according to a sectional plane perpendicular to an elongation direction XX' of said rail. The rail 1 forms an opening 3 delimited by two side walls 1a and 1b connected by a bottom 1c. The side walls 1a and 1b are, moreover, extended, by their edge parallel to the direction of elongation XX', by inwardly bent sections so as to form, each, a groove 2a and 2b. It is understood that the two grooves 2a and 2b are inverted with respect to the opening 3. It is also understood that the two inwardly bent sections are spaced apart from each other to allow insertion of the fastening clip 1 into the opening 3 (described below).

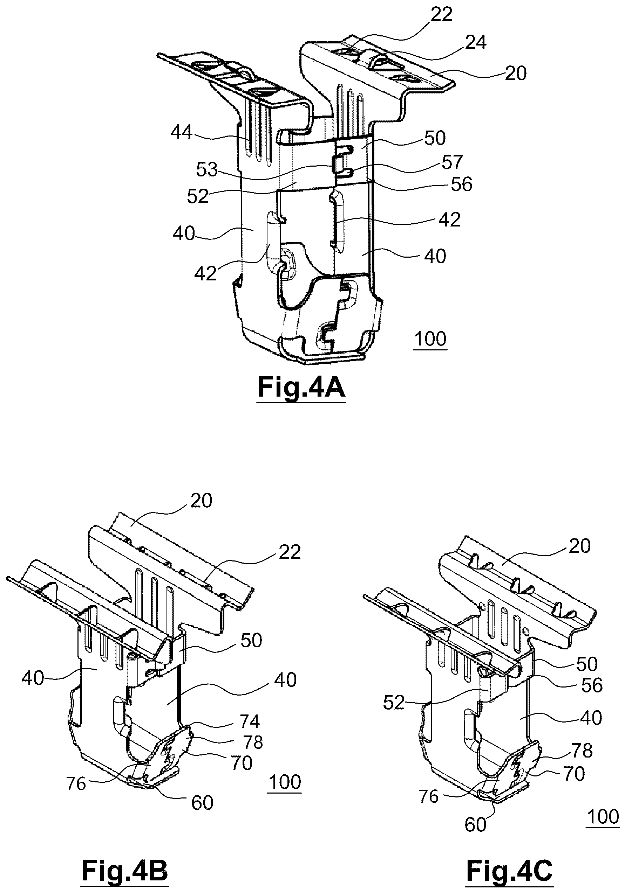

The fastening clip 100 secures two panels (not shown), in particular solar panels, to the rail 1. In particular, the clip 100, as shown in Fig.4, comprises two lateral wings 20, two opposite walls 40 and two attachment feet 70. More particularly, the two lateral wings 20 are configured to be held in abutment against a peripheral frame of the solar panel, while the attachment feet 70, which extend divergently towards the lateral wings 20, are received each by one said groove 2a, 2b of the rail 1. The panels are firmly clamped between the lateral wrings 20 and the rail 1. Optionally, the axis AA' and XX' are essentially perpendicular in this position.

Figure 4A illustrates a perspective view showing a fastening clip according to a first variant of present invention.

The fastening clip 100 comprises at least one holding means 50 for connecting directly the opposite walls 40. Advantageously, this prevents the two opposite walls 40 from toppling in the middle.

In this first variant, the holding means 50 consists of two arms 52, 56 which extend, perpendicularly to the opposite walls, towards each other, each from a wall 40. In particular, the arms 52, 56 comprise attachment means disposed at the free ends of both arms and configured to oppose the spreading of the two opposite walls 50 as soon as a spreading force is imposed on said opposite walls.

More particularly, the attachment means includes a hook 57 and a window 53. The hook 57 is disposed at the free end of an arm 56, while the window 53 is disposed at the free end of the other arm 52. The hook 57 is engaged in the window 53, which may advantageously have an adapted shape to hold the hook.

Advantageously, the lateral wings 20 comprise captive means. According to this variant, the captive means have one or more folded tabs 22 projecting toward the bottom plate 60. As a preference, the folded tabs are terminated by a point so as to be able to scratch the panel when the lateral wings 20 are resting against said panel. More advantageously, the sharp tabs provide an electrical function. More precisely, the fastened solar panels are thus electrically connected to the steel fastening clip 100 which is also electrically connected to the rail 1 thus to the ground. Thus, the grounding function is assured.

In a particularly advantageous manner, the fastening clip 100 has means for elevating the lateral wing 20.

The elevating means 24 according to this variant may comprise tab forming a hook configured to be elevated with a tool. Then the lateral wings are elevated to release the fastened panels.

Advantageously, the two opposite walls 40 comprise each, on their vertical edges of different sides, a vertical gap 42. As explained later in a preferred embodiment, it is possible to use a quarter turn install through these two gaps, when mounting the fastening clip 100 on a rail with a U-shaped cross-section.

As we can observe on Figure 4A, two opposite walls 40 comprise means for strengthening the walls. The strengthening means may comprise at least one stiffener 44.

Figure 4B is a representation of a second variant of an embodiment of a one-piece fastening clip 100 according to the present invention. In this second example, the fastening clip 100 essentially has all the features described in connection with the first variant.

According to this second variant, the fastening clip 100 includes a further tab with tip projecting toward the plate 60, in the place of means 24 for elevating the lateral wing. Advantageously, this enhances further the clamp of the panel frame.

As shown in Figure 4B, the lateral wings have each a V-shaped cross-section to hold the panel 10 clamped against the support rail 1, which will be detailed later.

When installing a panel, the fastening clip 100 is inserted into the opening 3. The two attachment feet 70, at their upper ends, have a spacing greater than the distance between their lower ends.

The method as to how to install the fastening clip and the panels will be detailed in the following.

The upper ends of the two attachment feet 70 are engaged in grooves of a support rail such that the fastening clip 100 is engaged in the opening of the rail 1.

Figure 4C is a representation of a second variant of an embodiment of a one-piece fastening clip 100 according to the present invention.

In this third example, the fastening clip 100 essentially has all the features described in connection with the second variant.

According to this third variant, the holding means 50 consists of two arms 52, 56 which extend, perpendicularly to the opposite walls, towards each other, each from a wall 40. In particular, the arms 52, 56 contact each other.

Advantageously, the opposite walls 40 are prevented from being bent under external force, for example during wind load. Thus, the pull-out force is enhanced.

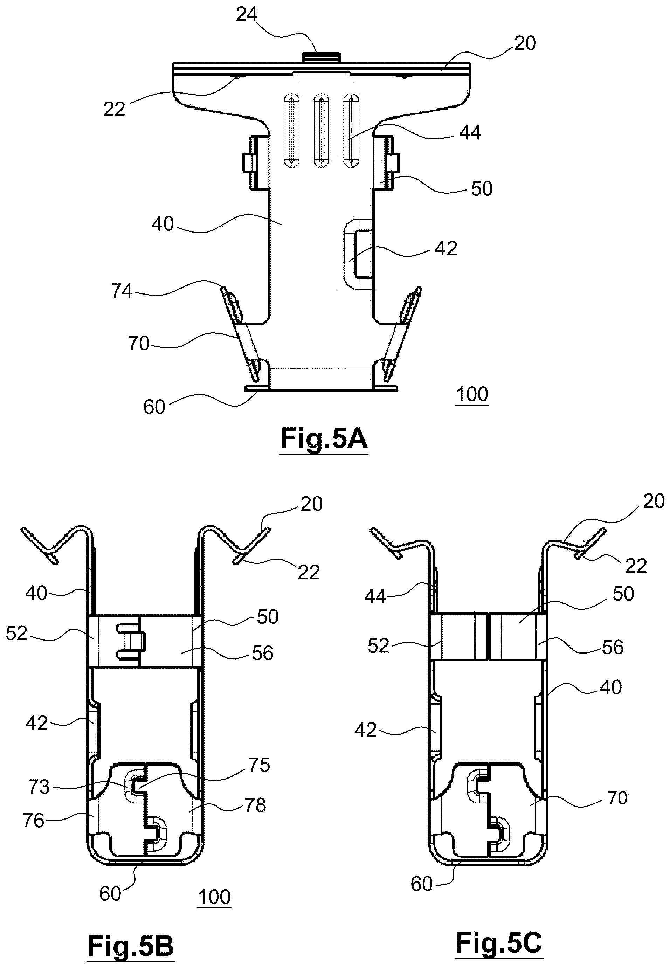

Figure 5A illustrates a side view showing a fastening clip according to the first variant of present invention.

As can be seen, the wall 40 comprises, on its vertical edge a vertical gap 42, which presents a U-shape lying on side.

The attachment feet 70 extend from the opposite walls 40, with upper ends extending divergently towards the lateral wings 20.

Figure 5B illustrates a side view showing a fastening clip according to the second variant of present invention.

As can be seen from Figure 5B, the lateral wings 20 have each a V-shaped cross-section. The V-shaped lateral wings 20 exert, with its under face, a force on the fastened panel. This allows to enhance the clamping of the panel and increase the flexibility of the lateral wings 20.

The attachment feet 70 which extend from the opposite walls 40 each with complementary shapes, such as fingers 75 and gaps 73 which can be used to lock each other. Advantageously, each attachment foot 70 has two complementary parts 76, 78 each having a finger 75 and a gap 73.

Figure 5C illustrates a side view showing a fastening clip according to the third variant of present invention.

The arms 52, 56 contact each other, at the free ends which are bent.

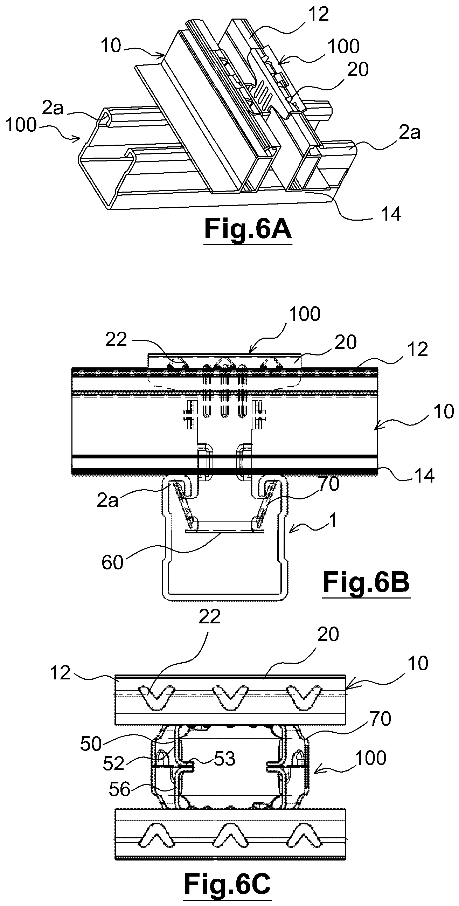

Figure 6A shows a perspective view showing a fastening clip 100 according to the first variant, with panels being mounted on a support rail 1.

In this illustrated position, the panels 10 are held by the fastening clip 100 with its bottom face, named contact face 14, against the rail 1. The lateral wing 20 is clamped onthe face 12 of the panel or the panel frame 10 opposite the contact face 14.

The attachment feet 70 are in abutment against the two grooves of the rails. This will be better illustrated in Figure 6B.

Figure 6B illustrates a side view showing a fastening clip according to the second variant, with panels being mounted on a support rail.

Advantageously, the attachment feet 70 enter into abutment against the two grooves 2a, 2b of the rail 1, with the upper free end of the attachment feet locking the ceiling of the rail 1.

Figure 6C illustrates a view from above showing a fastening clip 100 according to the third variant, with panels 10 being mounted on a support rail 1.

The fastening clip 100 is in tension and as a result exerts a force on the lateral wings 20. This force results in a clamping of the panels 10 between the lateral wings 20 and the rail 1. More particularly, the lateral wing 20, resting against the upper face 12 of the panel 10, keeps the latter tight against the rail 1.

Meanwhile, the folded tabs 22, which project toward the bottom plate 60, scratch the panel 10. Advantageously, the sharp tabs scratch firmly the panel 10.

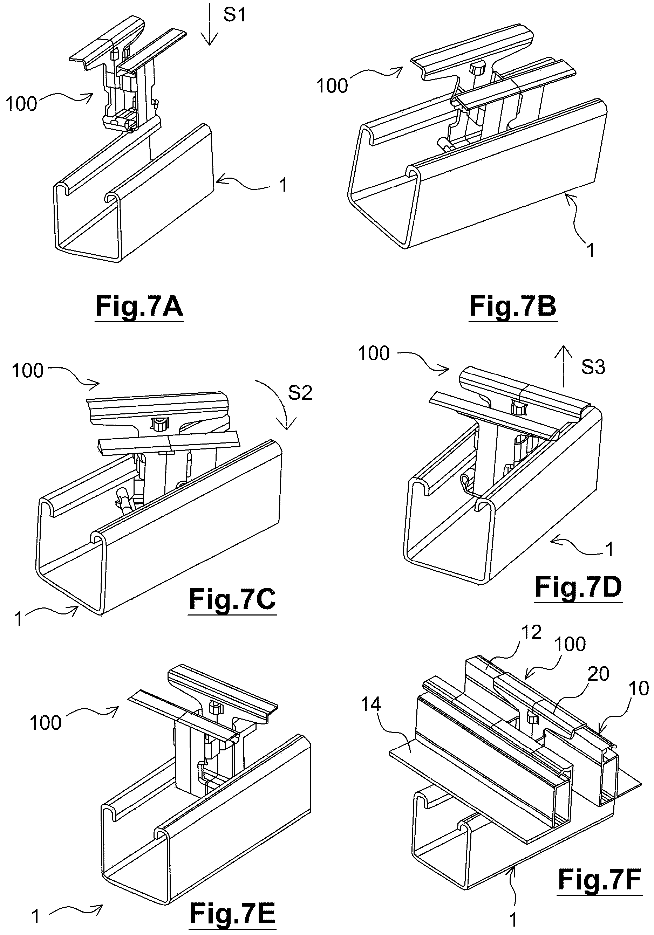

Figures 7A-7F illustrate consecutive steps of how to fasten panels on a support rail with a fastening clip 100 according to present invention.

Firstly, the clip 100 is introduced into the opening of the rail 1, in the direction S1, the axis AA' and XX' being essentially parallel, as shown in Figure 7A.

Then the fastening clip 100 is received in the rail 1.

The clip 100 is then making a quarter turn following the direction S2 or around an axis perpendicular to the bottom plate 60. The dimensions of the rail 1 and the fastening clip 100 are configured such that a quarter turn is only possible with the U-shaped gaps 42 of the opposite walls 40. In fact, the inwardly bent sections of the rail 1 reduce the width of the opening of the rail 1. When the clip turns in the rail 1, the U-shaped gaps 42 receive each one groove 2a, 2b. This is illustrated in the Figure 7C.

Then the axis AA' of the clip 100 is perpendicular with the axis XX' of the rail 1. The clip 100 is pulled in the direction S3, away from the bottom of the rail, as shown in Figure 7D.

The attachment feet 70 received in the grooves 2a, 2b enter into abutment against the two grooves 2a, 2b of the rail 1 (Figure 7E).

It follows that two panels are mounted on the rail 1 and clamped by the clip 100, as shown in Figure 7F. We then explain one exemplary embodiment to realize this step.

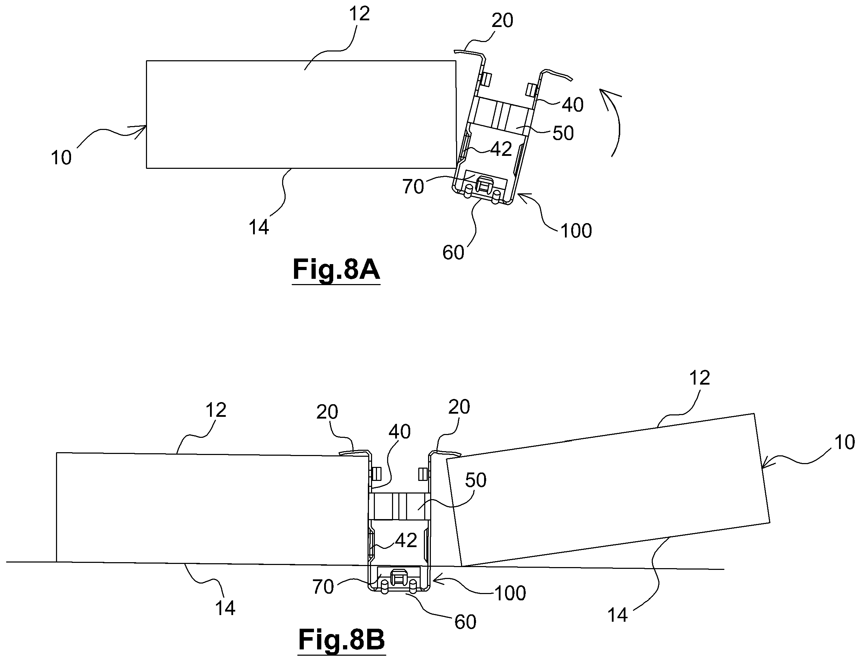

The fastening clip 10 in the position shown in Figure 7E pivots on a plane perpendicular to the axis AA', with an attachment foot 70 being kept in the groove 2a, 2b. The fastening clip 10 is inclined with one lateral wing above the other. A first panel 10 is then mounted between the higher lateral wing 20 and the rail 1. The fastening clip 10 then pivots back (following direction S4 as shown in Figure 8A) to its position as shown in Figure 7E, with the first panel 10 being clamped against the lateral wing 20 and the rail 1.

In the following, a second panel 10 is mounted between the other lateral wing 20 and the rail 1. The far end of the second panel is elevated such that the upper face 12 of the panel 10 enters in the direction S5 under the lateral wing 20 and abuts against the wall 40, as shown in Figure 8B. Then, the far end of the second panel 10 descends such that the bottom face 14 of the seconc panel 10 rests on the rail 1 and the lateral wing 20 rests on the above face 12 by the virtue of lever principle.

**REFERENCE LIST**

| Reference | Designation |
|---|---|
| 1 | rail |
| 1a | Side wall of rail |
| 1b | Side wall of rail |
| 1c | Bottom of rail |
| 2a | groove |
| 2b | groove |
| 3 | opening |
| 10 | panel |
| 12 | Upper face |
| 14 | Contact face |
| 100 | Fastening clip |
| 20 | Lateral wing |
| 22 | Fold tab |
| 24 | Elevating means |
| 40 | Wall |
| 42 | Vertical gap |
| 44 | Strengthening means |
| 50 | Holding means |
| 52 | Arm |
| 53 | Window |
| 56 | Arm |
| 57 | Hook |
| 60 | Plate |
| 70 | Attachment foot |
| 73 | Gap |
| 74 | End of attachment foot |
| 75 | Finger |
| 76 | Complementary part of attachment foot |
| 78 | Complementary part of attachment foot |

## Claims

1. A fastening clip (100), for holding a panel (10) clamped by one of its faces, named a contact face, against a rail (1) comprising at least two grooves (2a, 2b), the fastening clip comprises:
- two opposite walls (40), which extend along an axis AA';
- a plate (60), which connects directly the two walls (40) by their lower ends;
- two lateral wings (20), which laterally extend the two walls (40) from their upper ends in two opposite directions and away from each other, the lateral wings being intended to rest against a face of the panel opposite the contact face;
- two attachment feet (70), which extend divergently towards the lateral wings (20) and are suitable to be received each by one said groove (2a, 2b); wherein the fastening clip (100) is a monobloc piece.

2. Fastening clip (100) according to claim 1, the two opposite walls (40) comprise each, on their vertical edges of different sides, a vertical gap (42).

3. Fastening clip (100) according to any of preceding claims, wherein each of lateral wings (20) comprises at least one tab (20) with tip projecting toward the plate (60).

4. Fastening clip (100) according to any of preceding claims, wherein each of lateral wings (20) comprises means (24) for elevating the lateral wing (20), preferably,one hook.

5. Fastening clip (100) according to any of preceding claims, comprising at least one holding means (50) for connecting directly the opposite walls (40).

6. Fastening clip (100) according to claim 5, wherein at least oneholding means (50) consists of two arms (52, 56).

7. Fastening clip (100) according to claim 6, wherein the arms (52, 56) are attached by means of hooks (53, 57).

8. Fastening clip (100) according to claim 6, wherein the arms (52, 56) contact each other.

9. Fastening clip (100) according to any of claims 1-8, wherein the attachment feet (70) connect directly the two opposite walls (40).

10. Fastening clip (100) according to any of claims 1-8, wherein the attachment feet (70) laterally extend the plate (60) by two opposite sides.

11. Fastening clip (100) according to any of claims 1-9, wherein at least one attachment foot (70) comprises a free end (74) extending toward one lateral wing (20).

12. Fastening clip (100) according to any of preceding claims, wherein two opposite walls (40) comprise means (44) for strengthening the walls.

13. Kit of parts for clamping at least an elongated panel (10), comprising:
- at least one fastening clip (100) according to one of claims 1-12; and
- at least one rail (1) with a U-shaped section.

14. Method for installing two panels (10) with a kit of parts according to claim 13, comprising the following steps:
- installing a fastening clip (100) in a rail (1);
- inclining the clip (100) such that a first lateral wing (20) is elevated;
- mounting a first panel between the first lateral wing (20) and the rail (1);
- mounting a second panel between a second lateral wing (20) and the rail (1).

15. Method according to claim 14, wherein the step of installing a fastening clip in a rail (1) comprises a quarter turn install.

## Patentansprüche

1. Befestigungsclip (100) zum Halten eines Paneels (10), das von einer seiner Flächen, einer Kontaktfläche genannt, gegen eine Schiene (1) gespannt ist, die mindestens zwei Rillen (2a, 2b) umfasst, wobei der Befestigungsclip umfasst:
- zwei gegenüberliegende Wände (40), die sich entlang einer Achse AA' erstrecken;
- eine Platte (60), die die beiden Wände (40) an ihren unteren Enden direkt verbindet;
- zwei seitliche Flügel (20), die die beiden Wände (40) seitlich von ihren oberen Enden in zwei gegenüberliegenden Richtungen und voneinander weg erstrecken, wobei die seitlichen Flügel an einer der Kontaktfläche gegenüberliegenden Fläche des Paneels anliegen sollen;
- zwei Befestigungsfüße (70), die sich abweichend zu den seitlichen Flügeln (20) erstrecken und jeweils durch eine der Rillen (2a, 2b) aufgenommen werden können;
wobei der Befestigungsclip (100) ein Monoblockstück ist.

2. Befestigungsclip (100) nach Anspruch 1, wobei die beiden gegenüberliegenden Wände (40) jeweils an ihren vertikalen Kanten unterschiedlicher Seiten einen vertikalen Spalt (42) umfassen.

3. Befestigungsclip (100) nach einem der vorhergehenden Ansprüche, wobei jeder der seitlichen Flügel (20) mindestens eine Lasche (20) umfasst, deren Spitze in Richtung der Platte (60) vorsteht.

4. Befestigungsclip (100) nach einem der vorhergehenden Ansprüche, wobei jeder der seitlichen Flügel (20) Mittel (24) zum Anheben des seitlichen Flügels (20), vorzugsweise einen Haken, umfasst.

5. Befestigungsclip (100) nach einem der vorhergehenden Ansprüche, umfassend mindestens ein Haltemittel (50) zum direkten Verbinden der gegenüberliegenden Wände (40).

6. Befestigungsclip (100) nach Anspruch 5, wobei mindestens ein Haltemittel (50) aus zwei Armen (52, 56) besteht.

7. Befestigungsclip (100) nach Anspruch 6, wobei die Arme (52, 56) mittels Haken (53, 57) befestigt sind.

8. Befestigungsclip (100) nach Anspruch 6, wobei die Arme (52, 56) einander berühren.

9. Befestigungsclip (100) nach einem der Ansprüche 1 bis 8, wobei die Befestigungsfüße (70) die beiden gegenüberliegenden Wände (40) direkt verbinden.

10. Befestigungsclip (100) nach einem der Ansprüche 1 bis 8, wobei die Befestigungsfüße (70) die Platte (60) seitlich um zwei gegenüberliegende Seiten verlängern.

11. Befestigungsclip (100) nach einem der Ansprüche 1 bis 9, wobei mindestens ein Befestigungsfuß (70) ein freies Ende (74) umfasst, das sich zu einem seitlichen Flügel (20) erstreckt.

12. Befestigungsclip (100) nach einem der vorhergehenden Ansprüche, wobei zwei gegenüberliegende Wände (40) Mittel (44) zur Verstärkung der Wände umfassen.

13. Teilesatz zum Spannen mindestens eines länglichen Paneels (10), bestehend aus:
- mindestens einem Befestigungsclip (100) nach einem der Ansprüche 1 bis 12; und
- mindestens einer Schiene (1) mit einem U-förmigen Profil.

14. Verfahren zum Einbauen von zwei Paneelen (10) mit einem Teilesatz nach Anspruch 13, umfassend folgende Schritte:
- Einbauen eines Befestigungsclips (100) in eine Schiene (1);
- Neigen des Clips (100) so, dass ein erster seitlicher Flügel (20) angehoben ist;
- Montieren eines ersten Paneels zwischen dem ersten seitlichen Flügel (20) und der Schiene (1);
- Montieren eines zweiten Paneels zwischen einem zweiten seitlichen Flügel (20) und der Schiene (1).

15. Verfahren nach Anspruch 14, wobei der Schritt des Einbauens eines Befestigungsclips in einer Schiene (1) einen Einbau mit einer Vierteldrehung umfasst.

## Revendications

1. Attache de fixation (100) pour le maintien d'un panneau (10) serré par l'une de ses faces, dénommée face de contact, contre un rail (1) comportant au moins deux rainures (2a, 2b), l'attache de fixation comporte :
- deux parois opposées (40), qui s'étendent le long d'un axe AA' ;
- une plaque (60), qui relie directement les deux parois (40) par leurs extrémités inférieures ;
- deux ailes latérales (20), qui étendent latéralement les deux parois (40) à partir de leurs extrémités supérieures dans deux directions opposées et éloignées l'une de l'autre, les ailes latérales étant destinées à reposer contre une face du panneau opposée à la face de contact ;
- deux pieds de fixation (70), qui s'étendent de façon divergente en direction des ailes latérales (20) et sont aptes à être reçus chacun par une dite rainure (2a, 2b) ; dans laquelle l'attache de fixation (100) est une pièce monobloc.

2. Attache de fixation (100) selon la revendication 1, dans laquelle les deux parois opposées (40) comportent chacune, sur leurs bords verticaux de côtés différents, un espace vertical (42).

3. Attache de fixation (100) selon l'une quelconque des revendications précédentes, dans laquelle chacune des ailes latérales (20) comporte au moins une languette (20) dont la pointe fait saillie en direction de la plaque (60).

4. Attache de fixation (100) selon l'une quelconque des revendications précédentes, dans laquelle chacune des ailes latérales (20) comporte des moyens (24) d'élévation de l'aile latérale (20), de préférence un crochet.

5. Attache de fixation (100) selon l'une quelconque des revendications précédentes, comportant au moins un moyen de maintien (50) permettant de relier directement les parois opposées (40).

6. Attache de fixation (100) selon la revendication 5, dans laquelle au moins un moyen de maintien (50) est constitué de deux bras (52, 56).

7. Attache de fixation (100) selon la revendication 6, dans laquelle les bras (52, 56) sont fixés au moyen de crochets (53, 57).

8. Attache de fixation (100) selon la revendication 6, dans laquelle les bras (52, 56) sont en contact l'un avec l'autre.

9. Attache de fixation (100) selon l'une quelconque des revendications 1 à 8, dans laquelle les pieds de fixation (70) relient directement les deux parois opposées (40).

10. Attache de fixation (100) selon l'une quelconque des revendications 1 à 8, dans laquelle les pieds de fixation (70) étendent latéralement la plaque (60) par deux côtés opposés.

11. Attache de fixation (100) selon l'une quelconque des revendications 1 à 9, dans laquelle au moins un pied de fixation (70) comporte une extrémité libre (74) s'étendant en direction d'une aile latérale (20).

12. Attache de fixation (100) selon l'une quelconque des revendications précédentes, dans laquelle deux parois (40) opposées comportent des moyens (44) de renforcement des parois.

13. Kit de pièces pour le serrage d'au moins un panneau allongé (10), comportant :
- au moins une attache de fixation (100) selon l'une des revendications 1 à 12 ; et
- au moins un rail (1) de section en forme de U.

14. Procédé d'installation de deux panneaux (10) avec un kit de pièces selon la revendication 13, comportant les étapes suivantes :
- l'installation d'une attache de fixation (100) dans un rail (1) ;
- l'inclinaison de l'attache (100) de sorte qu'une première aile latérale (20) soit élevée ;
- le montage d'un premier panneau entre la première aile latérale (20) et le rail (1) ;
- le montage d'un deuxième panneau entre une deuxième aile latérale (20) et le rail (1).

15. Procédé selon la revendication 14, dans lequel l'étape d'installation d'une attache de fixation dans un rail (1) comporte une installation quart de tour.
